# EUROPÄISCHE PATENTANMELDUNG

(11) **EP 4 700 170 A1**
(43) Veröffentlichungstag der Anmeldung: **25.02.2026**
(21) Anmeldenummer: 25190599.8
(22) Anmeldetag: 21.07.2025
(51) Int. Cl.: D06F 33/34, D06F 103/06, D06F 103/18, D06F 103/38, D06F 103/46, D06F 105/02

(54) **BESTIMMEN EINES MASSES EINER FLÜSSIGKEIT IN EINEM SCHWINGEND AUFGEHÄNGTEN BEHÄLTER**

(30) Priorität: 21.08.2024 DE 102024207938
(71) Anmelder: BSH Hausgeräte GmbH, 81739 München (DE)
(72) Erfinder: Schliecker, Gudrun, 10967 Berlin (DE); Schrader, Philipp, 13347 Berlin (DE)

(57) **Zusammenfassung**

Die Erfindung betrifft ein Verfahren und eine Vorrichtung 1 zur Durchführung des Verfahrens zum Bestimmen eines ersten Maßes einer Flüssigkeit in einem schwingend aufgehängten und eine mittels eines elektrischen Motors 14 rotierbare Komponente 4 aufweisenden Behälter 3, wobei die Flüssigkeit mit einem Zuführventil 16 in den Behälter 3 zuführbar und mit einer Abführeinrichtung 18 aus dem Behälter 3 abführbar ist, und wobei Sensoren 19, 20, 21, 22, 24, 25 zum kontinuierlichen Aufnehmen von Betriebsdaten des Behälters 3 und eine mit den Sensoren 19, 20, 21, 22, 24, 25 zum Übermitteln der Betriebsdaten verbundene Steuereinrichtung 28 zum Steuern des Zuführventils 16 vorgesehen sind. Zumindest zwei der Sensoren 19, 20, 21, 22, 24, 25 sind aus einer Liste von Sensoren umfassend einen dem Behälter 3 zugeordneten Schwingungssensor 25, einen Motorstromsensor 19, einen Drehzahlsensor 20, einen Drucksensor 21 und eine Stoppuhr 29 zum Bestimmen von Öffnungszeiträumen des Zuführventils 16 ausgewählt. Die Betriebsdaten werden einer der Steuereinrichtung 28 zugehörigen Korrelationseinheit 30 zugeführt, in welcher anhand von Trainingsdaten, welche als gelernte Korrelationen zwischen dem ersten Maß und den Betriebsdaten gespeichert sind, und das erste Maß wird durch die Korrelationseinheit 30 aus den Betriebsdaten bestimmt, indem die Betriebsdaten als Eingangsgrößen für die Korrelationseinheit 30 verwendet werden und das erste Maß eine Ausgangsgröße der Korrelationseinheit 30 ist.

## Beschreibung

Die Erfindung betrifft ein Verfahren zum Bestimmen eines Maßes einer Flüssigkeit in einem schwingend aufgehängten Behälter, wobei Sensoren Betriebsdaten des Behälters kontinuierlich aufnehmen und einer mit den Sensoren verbundenen Steuereinrichtung zum Steuern eines Zuflusses der Flüssigkeit entsprechend den Betriebsdaten zuführen und wobei die Steuereinrichtung das Maß aus den Betriebsdaten bestimmt. Die Erfindung betrifft auch eine Vorrichtung zur Durchführung eines solchen Verfahrens.

Das Dokument EP 3 988 697 A1 offenbart ein Verfahren der oben definierten Gattung, das Verfahren implementiert in einer Wäschebehandlungsmaschine, wobei der schwingend aufgehängte Behälter ein Laugenbehälter mit einer darin drehbaren Trommel zum Aufnehmen von zu pflegenden Wäschestücken ist. Gemäß diesem Dokument wird Schaum, welcher sich beim Bewegen der Trommel und der Wäschestücke in Flüssigkeit, insbesondere Wasch- oder Spüllauge, mit der der Behälter teilweise gefüllt ist, bilden kann, aus einer Vielzahl von Betriebsdaten des Behälters bestimmt, zumal sich der Schaum während eines Wäschepflegeprozesses, welcher durch Rotationen der Trommel und Bewegungen der Wäschestücke in der Trommel und in der Flüssigkeit im Behälter bestimmt ist, kaum direkt messen lässt, wobei in der dem Behälter zugeordneten Steuereinrichtung ein "virtueller Sensor" eingerichtet ist, welcher aus den zugeführten Betriebsdaten kontinuierlich ein Maß für in dem Behälter vorhandenen Schaum ermittelt. Der virtuelle Sensor kann ein trainiertes Datenverarbeitungssystem sein, beispielsweise ein trainiertes neuronales Netz, bei dem das Training erfolgt ist mit experimentell an einem Modell des Behälters mit der Trommel ermittelten Messdaten.

Das Dokument US 2020/0248357 A1 offenbart ein Verfahren, bei dem eine Unwucht in einem schwingend aufgehängten Behälter einer mit einem entsprechend trainierten neuronalen Netz eingerichteten Wäschebehandlungsmaschine bestimmt wird, welche Unwucht durch Wäsche, die in dem Behälter durch eine rotierende Trommel bewegt wird, hervorgerufen wird. Dabei wird nicht nur eine jeweils aktuell vorliegende Unwucht bestimmt, sondern es wird zu Beginn eines Schleuderprozesses, bei dem die Wäsche bei relativ hoher Rotationsgeschwindigkeit der Trommel zum Auspressen von Wasch- oder Spüllauge zentrifugiert wird, eine Prognose der während des Schleuderprozesses auftretenden Unwucht gestellt.

Das Behandeln von Wäschestücken in einer Wäschepflegemaschine beinhaltet regelmäßig eine Zufuhr von Wasser zu den zu pflegenden Wäschestücken, welches noch mit Wasch- oder Spülmitteln enthaltend insbesondere verschiedene Tenside, Seifen, Enzyme und Wasserenthärter zum Bilden eine Wasch- oder Spüllauge versetzt wird. Zum Bestimmen eines einem entsprechenden Behälter zugeführten Maßes an Wasser, insbesondere seines Volumens oder seiner Masse, kann ein Durchflusssensor benutzt werden, welcher von dem Behälter zuzuführenden Wasser durchflossen werden muss. Ebenso können die Öffnungszeit eines Ventils, durch welches die Zufuhr aus einem Wasserversorgungsnetz erfolgt, und der Druck, unter dem solches Wasser in einer Leitung, in der es dem Behälter zufließt, steht, zur Bestimmung eines Maßes des dem Behälter zugeflossenen Wassers bestimmt werden. Weiterhin kann auch der Behälter mit einem Drucksensor versehen sein, welche einen hydrostatischen Druck in der im Behälter vorliegenden Flüssigkeit misst. Alle diese Methoden zum Bestimmen eines Maßes der im Behälter vorliegenden Flüssigkeit sind aufwändig und teuer wie die Anwendung eines Durchflusssensors oder ungenau wie die Anwendung eines Drucksensors und die Messung der Öffnungszeit des Ventils.

Eine Varianz bei der Bestimmung eines Maßes einer Flüssigkeit in einem Behälter zieht folgende Varianzen in der Anwendung solcher Flüssigkeit nach sich, beispielsweise dann, wenn diese Flüssigkeit in einer Pflegeprozedur für Wäschestücke, die sich ebenfalls in dem Behälter befinden und mittels der Flüssigkeit gepflegt, insbesondere gewaschen, werden sollen. Ein Übermaß an Flüssigkeit kann zur Unterdosierung eines zudosierten Pflegemittels, insbesondere Waschmittels oder Spülmittels, und zu einer ungenügenden Erwärmung der Flüssigkeit bei Beheizung führen, ein Untermaß an Flüssigkeit kann zur Überdosierung des zudosierten Pflegemittels oder zu einer übermäßigen Erwärmung der Flüssigkeit führen. Wenn gegenseitige Bewegung von Gegenständen in der Flüssigkeit erfolgen soll, wie dies in einer gewöhnlichen Wasch- oder Spülprozedur für Wäschestücke erforderlich ist, kann ein Untermaß oder Übermaß an Flüssigkeit ebenfalls zu unerwünscht hoher oder niedriger gegenseitiger Bewegung führen. Eine für automatischen Ablauf bestimmte Prozedur zur Anwendung solcher Flüssigkeit in einem Behälter muss deshalb die Varianz bei der Bestimmung des Maßes der Flüssigkeit in Betracht ziehen, um Nachteile, die sich aus den folgenden Varianzen ergeben, zu kontrollieren und zu vermeiden. Zum Ausgleich solcher Nachteile muss die Prozedur eventuell verlängert, die Vorgabe des Maßes für die erforderliche Flüssigkeit muss erhöht, die Vorgabe für eine Temperatur der Flüssigkeit reduziert, oder die Zudosierung von Pflegemittel verändert werden, gegebenenfalls auch durch Kombination mehrerer solcher Maßnahmen. Letztlich kompromittiert solches die Prozedur, indem es den mit ihr verbundenen Aufwand erhöht und ihre Leistung verringert.

Es besteht somit ein Bedarf an einem Verfahren eingangs definierter Gattung nebst Vorrichtung zu seiner Durchführung, welches mit möglichst geringem Aufwand an Material und Datenverarbeitung ein möglichst genaues Bestimmen eines Maßes einer Flüssigkeit in einem schwingend aufgehängten Behälter erlaubt. Auch soll das Verfahren in eine Prozedur zur Anwendung der Flüssigkeit einbindbar sein, um die Prozedur insbesondere hinsichtlich Zeitdauer, Anforderung an Flüssigkeit sowie Dosierung zusätzlicher Mittel zu dieser und Aufwand an Energie zu optimieren.

Zur Lösung dieser Aufgabe werden gemäß der Erfindung ein Verfahren mit eingangs und im Oberbegriff des entsprechenden unabhängigen Patentanspruchs aufgeführten Gattungsmerkmalen, welches zusätzlich die Merkmale des kennzeichnenden Teils des entsprechenden unabhängigen Patentanspruchs aufweist, und eine Vorrichtung zur Durchführung eines solchen Verfahrens gemäß entsprechendem unabhängigem Patentanspruch angegeben.

Bevorzugte Ausgestaltungen der Erfindung sind in den abhängigen Patentansprüchen sowie in nachfolgender Beschreibung aufgeführt und können auch in Kombinationen untereinander angewendet werden, soweit technische Erwägungen dies gestatten und auch sofern dies hierin nicht explizit ausgeführt ist. Bevorzugten Ausgestaltungen des erfindungsgemäßen Verfahrens entsprechen bevorzugte Ausgestaltungen der erfindungsgemäßen Vorrichtung und umgekehrt, soweit technische Erwägungen dies gestatten und auch sofern dies hierin nicht explizit ausgeführt ist.

Zur Lösung der Aufgabe wird gemäß der Erfindung dementsprechend angegeben ein Verfahren zum Bestimmen eines ersten Maßes einer Flüssigkeit in einem schwingend aufgehängten und eine rotierbare Komponente aufweisenden Behälter, wobei die rotierbare Komponente mittels eines elektrischen Motors zum Rotieren mit einer bestimmten Drehzahl angetrieben wird, indem der elektrische Motor von einem bestimmten Strom durchflossen wird, wobei eine Zuführleitung mit einem steuerbaren Zuführventil zum Zuführen der Flüssigkeit in den Behälter und eine Abführeinrichtung zum Abführen der Flüssigkeit aus dem Behälter vorgesehen sind, und wobei Sensoren zum kontinuierlichen Aufnehmen von Betriebsdaten des Behälters und eine mit den Sensoren zum Übermitteln der Betriebsdaten verbundene Steuereinrichtung zum Steuern des Zuführventils vorgesehen sind. Dabei sind zumindest zwei der Sensoren aus einer Liste von Sensoren umfassend einen dem Behälter zugeordneten Schwingungssensor, einen Stromsensor zum Messen des den Motor durchfließenden Stroms, einen Drehzahlsensor zum Messen der Drehzahl des Motors, einen Drucksensor zum Messen eines in dem Behälter herrschenden hydrostatischen Drucks und eine Stoppuhr zum Bestimmen von Öffnungszeiträumen des Zuführventils ausgewählt. Die mit den ausgewählten Sensoren aufgenommenen Betriebsdaten werden einer der Steuereinrichtung zugehörigen Korrelationseinheit zugeführt, in welcher anhand von Trainingsdaten, welche als Betriebsdaten für den Behälter bei jeweils vorgegebenem erstem Maß, insbesondere eines Volumens oder einer Masse der zugeführten Flüssigkeit, gemessen wurden, gelernte Korrelationen zwischen dem ersten Maß und den Betriebsdaten gespeichert sind, und das erste Maß wird durch die Korrelationseinheit aus den Betriebsdaten bestimmt, indem die Betriebsdaten als Eingangsgrößen für die Korrelationseinheit verwendet werden und das erste Maß, insbesondere das Volumen oder die Masse der Flüssigkeit, eine Ausgangsgröße der Korrelationseinheit ist.

Zur Lösung der Aufgabe wird gemäß der Erfindung dementsprechend ebenfalls angegeben eine Vorrichtung zur Durchführung des erfindungsgemäßen Verfahrens zum Bestimmen eines ersten Maßes einer Flüssigkeit, umfassend einen schwingend aufgehängten und eine rotierbare Komponente aufweisenden Behälter zum Aufnehmen der Flüssigkeit, wobei die rotierbare Komponente mittels eines elektrischen Motors zum Rotieren mit einer bestimmten Drehzahl antreibbar ist, indem der elektrische Motor von einem bestimmten Strom durchflossen wird, wobei eine Zuführleitung mit einem steuerbaren Zuführventil zum Zuführen der Flüssigkeit in den Behälter und eine Abführeinrichtung zum Abführen der Flüssigkeit aus dem Behälter vorgesehen sind, und wobei Sensoren zum kontinuierlichen Aufnehmen von Betriebsdaten des Behälters und eine mit den Sensoren zum Übermitteln der Betriebsdaten verbundene Steuereinrichtung zum Steuern des Zuführventils vorgesehen sind. Dabei sind zumindest zwei der Sensoren aus der Liste von Sensoren umfassend einen dem Behälter zugeordneten Schwingungssensor, einen Stromsensor zum Messen des den Motor durchfließenden Stroms, einen Drehzahlsensor zum Messen der Drehzahl des Motors, einen Drucksensor zum Messen eines in dem Behälter herrschenden hydrostatischen Drucks und eine Stoppuhr zum Bestimmen von Öffnungszeiträumen des Zuführventils ausgewählt. Es ist vorgesehen dass die mit den ausgewählten Sensoren aufgenommenen Betriebsdaten einer der Steuereinrichtung zugehörigen Korrelationseinheit zugeführt werden, in welcher anhand von Trainingsdaten, welche als Betriebsdaten für den Behälter bei jeweils vorgegebenem erstem Maß gemessen wurden, gelernte Korrelationen zwischen dem ersten Maß und den Betriebsdaten gespeichert sind, und das erste Maß durch die Korrelationseinheit aus den Betriebsdaten bestimmt wird, indem die Betriebsdaten als Eingangsgrößen für die Korrelationseinheit verwendet werden und das erste Maß, insbesondere das Volumen oder die Masse der Flüssigkeit, eine Ausgangsgröße der Korrelationseinheit ist.

Besondere Anforderungen hinsichtlich Auswahl und Platzierung der verschiedenen Sensoren, insbesondere des Schwingungssensors und des Drucksensors, gibt es nicht, so dass die Platzierung jedes Sensors unter Beachtung gegebener räumlicher Bedingungen und unter Vermeidung von Beeinträchtigungen der Umgebung des Behälters und anderer Komponenten erfolgen kann, wobei auch die Entstehung möglichst großer Messsignale und das Vorliegen starker Korrelationen zwischen den Messsignalen, dem ersten Maß und gegebenenfalls zusätzlich zu bestimmenden weiteren Maßen angestrebt werden kann.

Zum Erlangen der Trainingsdaten können in der rotierenden Komponente in dem schwingend aufgehängten Behälter durch gezielte Einbringung von Kalibriermassen sowie genau bestimmter Maße an Flüssigkeit genau definierte Schwingungen und Signale der Sensoren erzeugt werden, so dass durch die Beobachtung der entsprechenden Schwingungen des Behälters, des elektrischen Stromes, den der Motor aufnimmt, der Drehzahl, mit welcher er die rotierende Komponente rotiert, und des hydrostatischen Drucks, gegebenenfalls mit zugehörigen Schwankungen, Betriebsdaten erhalten werden, die im Anschluss zum Trainieren der Korrelationseinheit dienen können. Auch Messungen der Betriebsdaten ohne Einbringung von Kalibriermassen sind hilfreich, nicht zuletzt, um Effekte, die sich durch Asymmetrien der rotierenden Komponente selbst ergeben, erfassen und berücksichtigen zu können. Trainingsdaten können selbstverständlich auch erzeugt werden durch direkte Berechnung der Betriebsdaten in Abhängigkeit von vorgegebener Unwucht vorgegebenem Maß an Flüssigkeit und vorgegebener Drehzahl der rotierenden Komponente, sofern die das schwingungsfähige System beschreibenden Parameter bekannt sind oder erschlossen werden konnten.

Die Messsignale müssen den jeweiligen Betriebsdaten nicht direkt entsprechen oder nur proportional sein. Es können auch je nach Verfügbarkeit Messsignale aufgenommen werden, deren Korrespondenz zu den Betriebsdaten komplexer ist. So ist es zum Beispiel möglich, den Strom durch den Motor als eine Messgröße zu bestimmen, die dem von dem Motor durch den Strom erzeugten Drehmoment entspricht. Bei einem Motor des BLDC-Typs kann eine solche Messgröße unmittelbar verfügbar sein. Der Drucksensor kann entsprechend geläufiger Praxis bei Wäschepflegemaschinen ein an einen unteren Bereich des Behälters, welcher bei normalem Betrieb mit Flüssigkeit gefüllt ist, angeschlossenes, nach oben gerichtetes und mit Luft gefülltes, an seinem oberen Ende verschlossenes Rohr sein, wobei sich der eigentliche Drucksensor am oberen Ende befindet, zur Messung des Drucks in der durch am unteren Ende des Rohrs eingedrungene Flüssigkeit komprimierten Luft. Dieser Druck korrespondiert zum hydrostatischen Druck im untersten Bereich des Behälters, ohne ihm unbedingt gleich zu sein.

Die Schwingungen, der Strom, die Drehzahl und der Druck werden insbesondere als jeweilige Zeitreihen von Messwerten gemessen, wobei jeweils Zeitabstände zwischen zwei unmittelbar aufeinanderfolgenden Werten untereinander gleich und einem Bruchteil einer Umdrehungsperiode der rotierenden Komponente entsprechen, und bei dem aus jeder der Zeitreihen eine Amplitude und eine Phase eines jeweiligen, der Umdrehungsperiode entsprechenden Drehfrequenz der rotierenden Komponente zugehörigen Anteils der Zeitreihe bestimmt wird. Diese Zeitreihen können im Rahmen der Erfindung unmittelbar als Eingabewerte der Korrelationseinheit verwendet werden, wodurch allfällige Vorarbeiten vermieden werden.

Es ist aber auch denkbar und im Rahmen der Erfindung möglich, die Zeitreihen einer Vorverarbeitung zu unterziehen, beispielsweise um Rauscheffekte zu verringern und dadurch die Genauigkeit der Messungen zu erhöhen. Insbesondere können die Zeitreihen einer Tiefpass- oder Bandpassfilterung unterzogen werden, gegebenenfalls unterstützt durch die Anwendung einer schnellen Fouriertransformation.

Das erfindungsgemäße Verfahren und die entsprechende Vorrichtung zu seiner Durchführung erlauben somit mit geringem Aufwand an Material und Datenverarbeitung ein genaues Bestimmen eines Maßes der Flüssigkeit in dem schwingend aufgehängten Behälter. Insbesondere ist es nicht erforderlich, die Zusammenhänge zwischen dem ersten Maß und den Betriebsdaten genau und quantitativ zu beschreiben. Das erfindungsgemäße Verfahren ist in eine Prozedur zur Anwendung der Flüssigkeit zur Optimierung der Prozedur insbesondere hinsichtlich Zeitdauer, Anforderung an Flüssigkeit sowie Dosierung zusätzlicher Mittel zu dieser und Aufwand an Energie einbindbar. Insbesondere durch die Verwendung zumindest zweier unterschiedlichen Sensorarten kann die Genauigkeit der Ausgangsgröße der Korrelationseinheit verbessert werden. Es können auch mehr als zwei unterschiedliche Sensoren zur Erfassung der Betriebsdaten verwendet werden, wodurch vorteilhaft die Genauigkeit der Ausgangsgröße noch weiter gesteigert werden kann.

In einer bevorzugten Weiterbildung der Erfindung ist in der Korrelationseinheit eine aus den Trainingsdaten bestimmte Regression implementiert, durch welche das erste Maß aus den Betriebsdaten bestimmt wird. Die Trainingsdaten bilden eine vieldimensionale Matrix, welche Zusammenhänge oder Korrelationen zwischen den gemessenen Daten und den Daten betreffend das erste Maß, gegebenenfalls auch weitere Maße, darstellt. Bei einer Regression werden an diese Zusammenhänge durch ebene oder gekrümmte Hyperflächen angenähert, wobei jede solche Hyperfläche eine lokale funktionale Beziehung zwischen den Daten definiert, aus welcher Werte für das erste Maß und eventuelle weitere gewünschte Daten berechenbar oder zumindest abschätzbar sind. Mit weiterem Vorzug ist die Regression eine rekurrente Regression, welche als Eingangsgrößen zusätzlich zu den Betriebsdaten zeitlich verzögerte Ausgangsgrößen der Korrelationseinheit, also Ausgangsgrößen, die zu früheren Zeitpunkten an der Korrelationseinheit aufgetreten sind, verwendet. Diese Ausgangsgrößen können Werte des ersten Maßes sein, es kommen aber auch andere Ausgangsgrößen in Frage, beispielsweise Zwischenergebnisse der Rekursion, wenn diese in mehreren Berechnungsschritten abläuft. Mit weiterem Vorzug ist die Korrelationseinheit ein NARX-Netzwerk.

In einer anderen bevorzugten Weiterbildung der Erfindung ist die Korrelationseinheit ein mit den Trainingsdaten trainiertes neuronales Netz. Mit weiterem Vorzug ist das neuronale Netz ein rekurrentes neuronales Netz, welches als Eingangsgrößen zusätzlich zu den Betriebsdaten zeitlich verzögerte Ausgangsgrößen des rekurrenten neuronalen Netzes verwendet. Mit besonderem Vorzug ist das neuronale Netz ein LSTM-Netz. Mit ebenfalls besonderem Vorzug ist das neuronale Netz mit GRU-Einheiten aufgebaut.

In einer weiteren bevorzugten Weiterbildung der Erfindung ist das erste Maß durch eine für die Flüssigkeit aufnahmefähige Füllung in der rotierenden Komponente beeinflusst, wobei die Verteilung der Füllung verändert wird, indem die rotierbare Komponente rotiert. Diese Weiterbildung erschließt die Anwendung der Erfindung an einer Maschine, welche der Pflege oder Behandlung einer Füllung mit Flüssigkeit dient, wobei die Füllung insbesondere Wäschestücke sind und die Maschine eine Wäschepflegemaschine ist. Mit weiterem Vorzug wird zusätzlich zu dem ersten Maß ein zweites Maß bestimmt, welches einen Anteil der Flüssigkeit angibt, welcher nicht von der Füllung aufgenommen ist. Im speziellen Fall der Wäschepflegemaschine und der Wäschestücke wird ein solcher Anteil von nicht aufgenommener Flüssigkeit gewöhnlich als "freie Flotte" bezeichnet. Mit noch weiterem Vorzug wird das erfindungsgemäße Verfahren an der in der rotierenden Komponente befindlichen Füllung zur Pflege mittels der Flüssigkeit angewendet, wobei die Füllung ein textiles Material aufweist, und bei dem zusätzlich zu dem ersten Maß eine Textilart der Füllung bestimmt wird. Eine solche Bestimmung nutzt insbesondere aus, dass sich Textilien verschiedener Arten durch unterschiedliche Aufnahmefähigkeiten für Wasser oder wässrige Flüssigkeit auszeichnen und insbesondere dann, wenn eine Trockenmasse der Textilien bekannt oder aus entsprechenden Messungen am Behälter ermittelt ist, anhand der Differenz zwischen insgesamt zugeführter Flüssigkeit und freier Flotte ermittelt werden kann. Demnach wird mit noch weiterem Vorzug zusätzlich aus dem ersten Maß, dem zweiten Maß und der Textilart eine Masse der Füllung bestimmt.

In noch einer weiteren bevorzugten Weiterbildung der Erfindung bildet die Flüssigkeit unter der Rotation der rotierenden Komponente einen Schaum, und die Korrelationseinheit bestimmt zusätzlich ein drittes Maß, welches ein Volumen des Schaums angibt. Dies ist, ebenso wie das Maß der freien Flotte und die Masse der Füllung, eine Information, die zur Steuerung eines Pflegeprozesses für die Füllung, insbesondere Wäschestücke, von großer Bedeutung ist und zur Optimierung eines solchen Pflegeprozesses hilfreich und nutzbar ist.

In einer zusätzlichen bevorzugten Weiterbildung der Erfindung wird das erste Maß quasi fortlaufend bestimmt, bis das erste Maß einen vorgegebenen Wert erreicht hat, und wird ein Pflegeprozess für die Füllung mittels der Flüssigkeit durchgeführt, nachdem das erste Maß den vorgegebenen Wert erreicht hat. Damit ist die Anwendung der Erfindung zur Steuerung eines Pflegeprozesses in der Weise erschlossen, dass der Pflegeprozess auf der Grundlage einer besonders genauen Dosierung der Flüssigkeit zu Beginn des Pflegeprozesses ausgelegt werden und ablaufen kann. Insbesondere besteht die Möglichkeit, das Maß der Flüssigkeit sehr genau an Erfordernisse der Füllung anzupassen und Überdosierungen zu vermeiden.

In erneut einer bevorzugten Weiterbildung der Erfindung misst der Schwingungssensor die Schwingungen in drei zueinander orthogonalen Dimensionen.

In wiederum einer bevorzugten Weiterbildung der Erfindung wird eine Temperatur der Flüssigkeit in dem Behälter zusätzlich zu den Betriebsdaten gemessen. Damit ist es möglich, das Maß der Flüssigkeit auf die Temperatur der Flüssigkeit abzustimmen und somit eine weiter erhöhte Genauigkeit zu erreichen.

In einer anderen bevorzugten Weiterbildung der Erfindung ist der Behälter mittels Federbeinen und Dämpferbeinen in einem Gehäuse aufgehängt. Dadurch werden Reaktionskräfte, die sich aus der Rotation der rotierbaren Komponente und der dadurch verursachten Bewegung der Füllung aufgefangen, und entsprechende Schwingungen werden gedämpft.

In noch einer anderen bevorzugten Weiterbildung der Erfindung ist die Vorrichtung als Wäschebehandlungsmaschine ausgebildet, wobei der Behälter ein Laugenbehälter ist, und wobei die rotierbare Komponente eine in dem Laugenbehälter angeordnete Trommel zum Aufnehmen der aus Wäschestücken gebildeten Füllung ist.

Grundsätzlich kann die Erfindung an einer Wäschebehandlungsmaschine beliebigen Typs angewendet werden, zumal der zur Anwendung der Erfindung notwendige Aufwand recht gering ist. Neben der konventionellen Waschmaschine kommt somit auch der Waschtrockner in Betracht. Dabei kommt es nicht darauf an, wie die Drehachse der Trommel bestimmungsgemäß im Raum orientiert ist. Die Drehachse kann im Wesentlichen horizontal ausgerichtet sein wie nachfolgend im Detail beschrieben, sie kann aber auch vertikal oder in beliebigem Winkel zur Vertikalen orientiert sein. Die Trommel ist insbesondere zylindrisch ausgeführt mit einem parallel zur Drehachse erstreckten Mantel, einer Rückwand, an die eine Antriebswelle angeschlossen ist, an ihrem hinteren Ende, und einem als Kreisring ausgeführten Stirnboden, durch den er Innenraum der Trommel zum Einbringen und Herausholen der Wäschestücke zugänglich ist, an ihrem vorderen Ende.

In einer weiteren bevorzugten Weiterbildung der Erfindung sind eine Heizung zum Beheizen der Flüssigkeit in dem Behälter und ein Leistungssensor zum Messen einer thermischen Leistung der Heizung vorgesehen. Dadurch können neben der Temperatur der Flüssigkeit auch deren Veränderungen genau bestimmt werden, was die Genauigkeit des Bestimmens des ersten Maßes weiter erhöht.

Die für das erfindungsgemäße Verfahren angegebenen Vorteile und Wirkungen gelten gleichermaßen auch für die entsprechende erfindungsgemäße Vorrichtung zur Durchführung des Verfahrens sowie umgekehrt. Insbesondere können daher Vorrichtungsmerkmale auch als Verfahrensmerkmale und umgekehrt formuliert sein.

Ausführungsbeispiele der Erfindung sind nachfolgend anhand der beigefügten Zeichnung näher erläutert. Es zeigen:
- Fig. 1: eine Skizze eines Beispiels einer erfindungsgemäß eingerichteten Wäschebehandlungsmaschine in Seitenansicht mit einem schwingend aufgehängten Behälter, in welchem eine rotierende Komponente angeordnet ist;
- Fig. 2: eine Skizze derselben Wäschebehandlungsmaschine in Frontansicht;
- Fig. 3 bis Fig. 5: Diagramme mit Messergebnissen, bestimmt mit dem erfindungsgemäßen Verfahren.

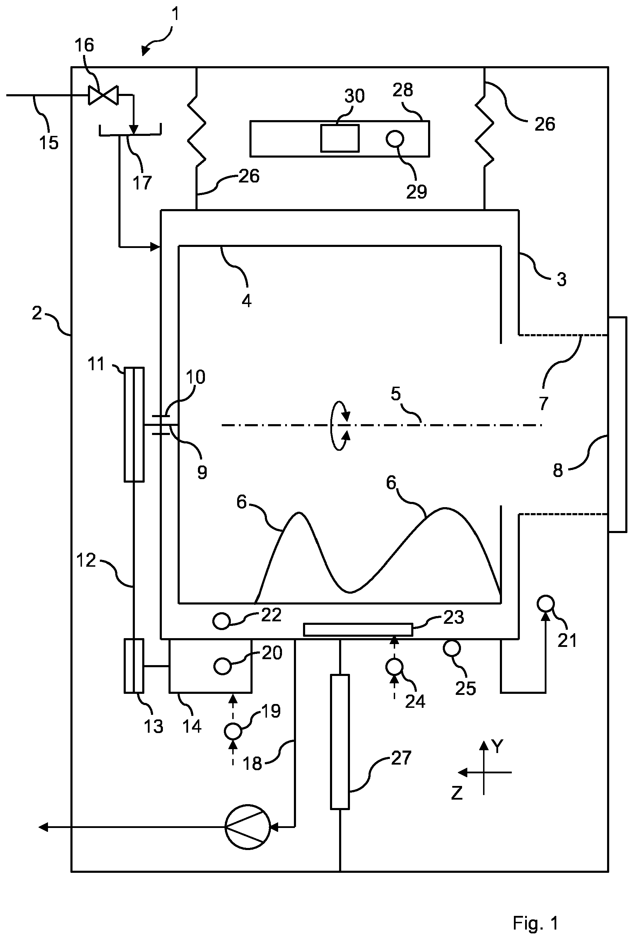

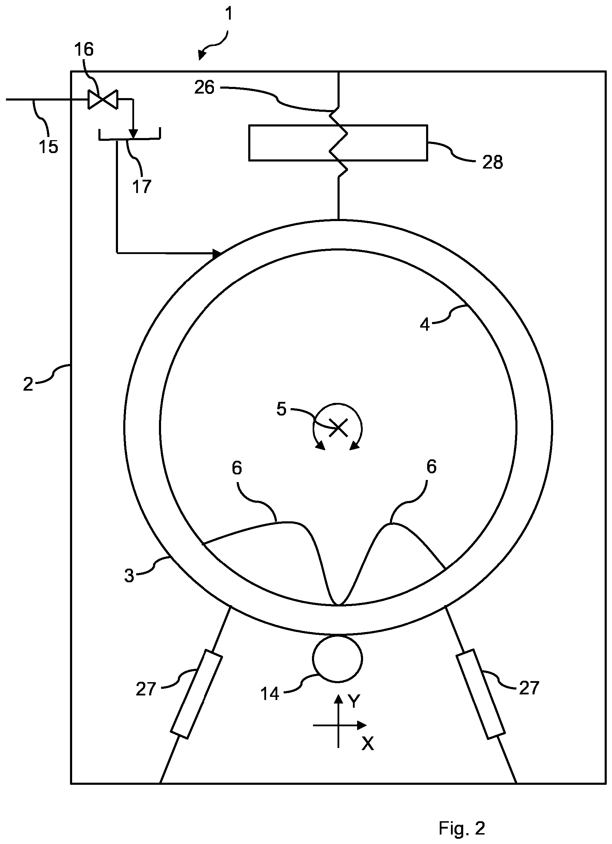

Die Figuren 1 und 2 zeigen in zwei zueinander orthogonalen Schnitten - Figur 1 in Ansicht in einer Y-Z-Ebene, also von einer Seite, und Figur 2 in Ansicht in einer X-Y-Ebene, also von vorn - eine schematisierte Ausführungsform einer Wäschebehandlungsmaschine 1, ausgestaltet als Beispiel für eine Vorrichtung zur Durchführung des erfindungsgemäßen Verfahrens. Die Wäschebehandlungsmaschine 1 hat ein Gehäuse 2 und darin angeordnet einen Behälter 3, nämlich einen Laugenbehälter 3 zum Aufnehmen einer Prozessflüssigkeit, insbesondere Wasch- oder Spüllauge für Textilien.

Die Wäschebehandlungsmaschine 1 ist ausgebildet als Waschmaschine 1. In dem Laugenbehälter 3 ist eine um eine Drehachse 5 rotierbare Komponente 5, nämlich eine Trommel 4, angeordnet. Die Drehachse 5 erscheint in Figur 1 als Punkt-Strich-Linie und in Figur 2 als X, jeweils umgeben von einem gebogenen Pfeil als Symbol der Rotation. Die Trommel 4 weist eine Füllung 6 aus mit einer Prozessflüssigkeit zu behandelnden Wäschestücken 6 auf, wobei die Füllung 6 die Trommel 4 teilweise ausfüllt und durch Rotieren der Trommel 4 mechanisch behandelt werden kann. Von einem vorderen Ende zu einem hinteren Ende des Laugenbehälters 3 erstreckt sich ein etwa zylindrischer Mantel des Laugenbehälters 3, welcher mit der Trommel 4 einen Spalt bildet. Die Trommel 4 ist nahe dem vorderen Ende von einem im wesentlichen kreisringförmigen Stirnboden abgeschlossen, nahe des hinteren Endes von einer im Wesentlichen kreisförmigen Rückwand. Eine in Figur 1 gestrichelt dargestellte Manschette 7 aus biegeschlaffem Material wie EPDM schließt den Laugenbehälter 3 flüssigkeitsdicht an das Gehäuse 2 an, eine Tür 8 schließt den Laugenbehälter 3 während des Betriebs der Wäschebehandlungsmaschine 1 flüssigkeitsdicht nach außen ab. Zur Rotation wird die Trommel 4 angetrieben über eine Antriebswelle 9, die an einem Wellenlager 10 dichtend durch den Laugenbehälter 3 geführt ist, eine erste Riemenscheibe 11, einen Antriebsriemen 12, eine zweite Riemenscheibe 13, und einen Motor 14, welcher am Laugenbehälter 3 befestigt ist. Eine Zuführleitung 15 dient zum Zuführen von Frischwasser aus einem öffentlichen Versorgungsnetz oder einem anderen Vorrat. Sie enthält ein elektrisch steuerbares Zuführventil 16 zur Abmessung der für einen Pflegeprozess jeweils erforderlichen Menge an Frischwasser. Diese gelangt zunächst zu einer Einspüleinrichtung 17, wo sie mit wasch- oder spülaktiven Agenzien, zum Beispiel fester oder flüssiger Waschmittelzubereitung oder Weichspüler, versetzt wird und dann in den Laugenbehälter 3 hineingelangt. Ebenso ist eine steuerbare Abführeinrichtung 18 umfassend eine Leitung und eine Pumpe vorgesehen, um nach Beendigung eines Pflegeprozesses die Flüssigkeit aus dem Laugenbehälter abzuführen.

Die zur Durchführung des erfindungsgemäßen Verfahrens im vorliegenden Beispiel verwendete Sensorik umfasst einen Stromsensor 19 zum Messen des den Motor 14 während seines Betreibens durchfließenden Stroms, einen Drehzahlsensor 20 zum Messen einer Drehzahl des Motors 14, einen Drucksensor 21 zum Messen eines in dem mit Flüssigkeit teilweise gefüllten Laugenbehälter 3 vorherrschenden hydrostatischen Drucks, einen Temperatursensor 22 zum Messen der Temperatur der Flüssigkeit im Laugenbehälter 3, einen einer Heizung 23 für die Flüssigkeit im Laugenbehälter 3 zugeordneten Leistungssensor 24 zum Messen der thermischen Leistung, welche die Heizung 23 zum Aufheizen der Flüssigkeit entwickelt, und einen Schwingungssensor 25, insbesondere einen 3D-Sensor 25, welcher Schwingungen des Laugenbehälters 3 misst, die durch die Rotation der Trommel 4 und die damit verbundene Bewegung der Wäschestücke 6, welche die Füllung 6 der Trommel 4 bilden, hervorgerufen werden und letztendlich auf Asymmetrien der Masseverteilung innerhalb der Trommel 4 und daraus hervorgehende Unwuchten zurückzuführen sind. Ein 3D-Sensor 25 kann diese Schwingungen in allen drei Dimensionen des Raumes messen. Der Stromsensor 19 kann ein in die Leitung, durch die dem Motor 14 der Strom zufließt, eingesetzter elektrischer Widerstand sein, über welchem eine dem Strom proportionale Spannung gemessen wird, wobei der Widerstand in die Steuereinrichtung 28 integriert sein kann. Der Drehzahlsensor 20 kann eine im Motor 14 befindliche Spule sein, in der dann, wenn der Motor 14 die Trommel 4 dreht, eine Spannung induziert wird, welche der Steuereinrichtung 28 zum Bestimmen der Drehzahl zugeführt wird. Alle diese Sensoren 19, 20, 21, 22, 24, 25 sind grundsätzlich bekannt und bedürfen an dieser Stelle keiner weiteren Erörterung. Grundsätzlich kann jeder geeignete bekannte Sensor verwendet werden. In alternativen Ausführungsbeispielen kann zur Durchführung des Verfahrens auch nur ein Teil der vorstehend genannten Sensoren verwendet werden, sofern zumindest erfindungsgemäß zwei der genannten Sensoren ausgewählt sind.

Der Laugenbehälter 3 ist mittels Federbeinen 26 und Dämpferbeinen 27 schwingend im Gehäuse 2 aufgehängt. Unwuchten, die sich insbesondere durch ungleichmäßig in der Trommel 4 verteilte Wäschestücke 6 ergeben und insbesondere dann, wenn die Trommel 4 zum Entfeuchten der Wäschestücke 6 durch Zentrifugieren oder Schleudern besonders schnell gedreht wird, besonders groß sein können, führen zu Schwingungen des Laugenbehälters 3, die von den Federbeinen 26 und Dämpferbeinen 27 aufgefangen werden, wobei die Energie dieser Schwingungen in den Dämpferbeinen 27 in Reibungswärme umgewandelt und an die Umgebung abgegeben wird.

Die Steuereinrichtung 28 dient der Steuerung der Wäschebehandlungsmaschine 1, insbesondere des Motors 14 und anderer, nicht dargestellter Systeme, und der Aufnahme und Auswertung der oben genannten Messwerte. Entsprechende Leitungen sind nur in Ausnahmen als gestrichelte Pfeile gezeigt. Die Steuereinrichtung 28 umfasst eine Stoppuhr 29, welche insbesondere dazu bestimmt ist, die Öffnungszeiten des Zuführventils 16 zu messen, und eine Korrelationseinheit 30, mit Hilfe derer die Steuereinrichtung 28 aus den Messdaten der Sensoren 19, 20, 21, 22, 24, 25 ein erstes Maß der in den Laugenbehälter 3 zum Beginn eines Pflegeprozesses eingeführte Menge an Flüssigkeit bestimmt. Insbesondere werden dazu benutzt Betriebsdaten des Schwingungssensors 25, des Stromsensors 19, des Drehzahlsensors 20 und des Drucksensors 21 benutzt, außerdem Betriebsdaten der Stoppuhr 29 zum Bestimmen von Öffnungszeiträumen des Zuführventils 16, indem diese Betriebsdaten einer der Steuereinrichtung 28 zugehörigen Korrelationseinheit 30 zugeführt werden, in welcher anhand von Trainingsdaten, welche als Betriebsdaten für den Laugenbehälter 3 bei jeweils vorgegebenem erstem Maß gemessen wurden, gelernte Korrelationen zwischen dem ersten Maß und den Betriebsdaten gespeichert sind, und das erste Maß wird durch die Korrelationseinheit 30 aus den Betriebsdaten bestimmt, indem die Betriebsdaten als Eingangsgrößen für die Korrelationseinheit 30 verwendet werden und das erste Maß eine Ausgangsgröße der Korrelationseinheit 30 ist. Zu Aufbau und Funktion der Korrelationseinheit 30 bestehen mehrere Ausführungsformen.

In einer ersten Ausführungsform ist in der Korrelationseinheit 30 eine aus den Trainingsdaten bestimmte Regression implementiert sein, durch welche das erste Maß aus den Betriebsdaten bestimmt wird. Diese Regression ist insbesondere eine rekurrente Regression, welche als Eingangsgrößen zusätzlich zu den Betriebsdaten zeitlich verzögerte Ausgangsgrößen der Korrelationseinheit 30 verwendet. Die Korrelationseinheit 30 ist vorliegend ein NARX-Netzwerk.

In einer zweiten Ausführungsform ist die Korrelationseinheit 30 ein mit den Trainingsdaten trainiertes neuronales Netz. Dieses neuronale Netz ist insbesondere ein rekurrentes neuronales Netz, welches als Eingangsgrößen zusätzlich zu den Betriebsdaten zeitlich verzögerte Ausgangsgrößen des rekurrenten neuronalen Netzes verwendet. Das neuronale Netz ist insbesondere ein LSTM-Netz, und ist mit GRU-Einheiten aufgebaut.

In beiden Ausführungsformen können die zeitlich verzögerten und erneut als Eingangsgrößen dienenden Ausgangsgrößen Werte des ersten Maßes oder eines anderen Maßes sein, es kann sich auch um Ausgangsgrößen handeln, die Zwischenergebnisse der Bearbeitung der Eingangsgrößen durch die Korrelationseinheit 30 sind.

Insbesondere in der vorliegenden Anwendung an einer Wäschepflegemaschine 1 ist das erste Maß durch eine für die Flüssigkeit aufnahmefähige, aus textilem Material bestehende Füllung 6 aus Wäschestücken 6 in der rotierenden Komponente 4 beeinflusst, wobei die Verteilung der Füllung 6 verändert wird, indem die rotierbare Komponente 4 rotiert. Dabei wird zusätzlich zu dem ersten Maß ein zweites Maß bestimmt, welches einen Anteil der Flüssigkeit angibt, welcher nicht von der Füllung 6 aufgenommen ist und im üblichen Sprachgebrauch somit eine "freie Flotte" bildet. Insbesondere durch Auswertung der zeitlichen Entwicklung der freien Flotte wird vorliegend auch eine Textilart der Füllung 6 bestimmt, wobei von den unterschiedlichen Aufnahmeverhalten oder Saugverhalten verschiedener Textilien ausgegangen wird. Auch wird zusätzlich aus dem ersten Maß, dem zweiten Maß und der Textilart eine Masse der Füllung 6 bestimmt. Darüber hinaus bildet bei dieser Anwendung die Flüssigkeit unter der Rotation der rotierenden Komponente einen Schaum, und die Korrelationseinheit 30 bestimmt zusätzlich noch ein drittes Maß, welches ein Volumen des Schaums angibt. Dieses Volumen kann direkt oder als Höhe des Schaums über einem ruhigen Spiegel der Flüssigkeit in dem Laugenbehälter 3 bestimmt werden.

Das erste Maß wird beim Einlassen von Frischwasser in den Laugenbehälter quasi fortlaufend bestimmt, bis das erste Maß einen vorgegebenen Wert erreicht hat, und ein Pflegeprozess für die Füllung 6 wird mittels der Flüssigkeit durchgeführt, nachdem das erste Maß den vorgegebenen Wert erreicht hat.

Es wird ein Schwingungssensor 25 verwendet, der die Schwingungen in drei zueinander orthogonalen Dimensionen misst. Auf diese Weise stehen drei Betriebsdaten, nämlich die Schwingungen des Laugenbehälters 3 in den drei Raumdimensionen, zur Auswertung im Rahmen des erfindungsgemäßen Verfahrens zur Verfügung. Zusätzlich wird auch mittels des Temperatursensors 22 eine Temperatur der Flüssigkeit in dem Behälter 3 zusätzlich zu den Betriebsdaten gemessen, um die Genauigkeit der Bestimmung des ersten Maßes weiter zu erhöhen.

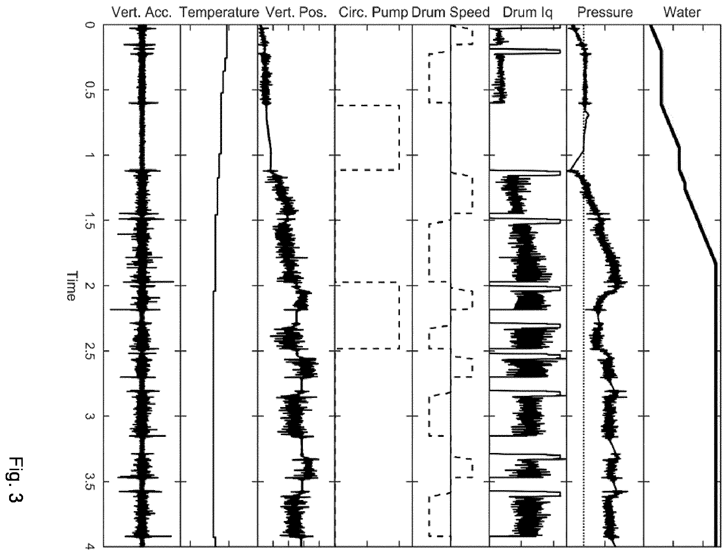

Die Figuren 3 bis 5 zeigen verschiedene Betriebsdaten einer Wäschepflegemaschine 1 mit vorgegebenem Maß an Flüssigkeit und vorgegebener Füllung. Die Betriebsdaten erscheinen in beliebigen Einheiten, wobei die Skalierung dieser Einheiten über die Figuren 3 bis 5 jeweils gleich sind. Die Ordinate der in der mit "Water" bezeichneten Betriebsdaten erstreckt sich dabei jeweils von Null auf Höhe der jeweiligen Abszisse bis 13 Liter. Dargestellt sind jeweils Zeitreihen von Betriebsdaten, also Betriebsdaten als Funktionen der Zeit, wobei die Einheit der Zeit eine Minute ist. Es wird noch angemerkt, dass die zum Aufnehmen der in den Figuren 3 bis 5 dargestellten Betriebsdaten benutzte Wäschepflegemaschine 1 eine Zirkulationspumpe aufweist, mit welcher Flüssigkeit aus dem unteren Bereich des Laugenbehälters 3 herausgepumpt und direkt in die Trommel 4 auf die Füllung 6 gefördert werden kann.

Die Figuren 3 bis 5 zeigen Zeitreihen folgender Betriebsdaten:
- "Water":: im Laugenbehälter 3 befindliche Wassermenge, also erstes Maß;
- "Pressure":: Signal des Drucksensors 21; die gestrichelte Linie zeigt den Druck, wenn die freie Flotte die Trommel 4 von unten berührt ("Eintauchhöhe");
- "Drum Iq":: Strom durch den Motor 14, gemessen mit dem Stromsensor 19;
- "Drum Speed":: Drehzahl der Trommel 4, positive und negative Werte entsprechend der reversierenden Rotation der Trommel 4;
- "Circ Pump":: Ein- oder Ausschaltung der Zirkulationspumpe;
- Vert. Pos.:: Positionssignal des 3D-Sensors 25, vertikale Komponente;
- Temperature:: Signal des Temperatursensors 24 an der Heizung 23;
- Vert. Acc.:: Beschleunigungssignal des 3D-Sensors 25, z-Komponente.

Figur 3 zeigt die Korrelationen zwischen Betriebsdaten wie Strom durch den Motor 14 sowie Positions- und Beschleunigungssignal des 3D-Sensors 25, welche sich in deutlich erhöhten Schwankungen zeigen, wenn die Trommel 4 rotiert und der Stand der Flüssigkeit im Laugenbehälter 3 so hoch ist, dass die Flüssigkeit an die Füllung 6 in der Trommel 4 gelangt. In dem "Pressure"-Signal erkennt man einen Abfall, nachdem zunächst die Eintauchhöhe erreicht wurde. Dies zeigt, dass die Füllung 6 in der Trommel 4 die Flüssigkeit aufnimmt, wobei die Zirkulationspumpe Flüssigkeit aus dem unteren Bereich des Laugenbehälters 3 direkt auf die Füllung 6 fördert, wo die Flüssigkeit dann aufgesaugt wird und nicht mehr zurück in den unteren Bereich des Laugenbehälters gelangt.

Figur 3 zeigt die Korrelationen zwischen den Betriebsdaten und dem ersten Maß bei einer Beladung der Wäschepflegemaschine 1 mit einer Füllung 6 von 2kg gemischter Textilien (Baumwolle und Synthetik), wie sie in einem Privathaushalt gewöhnlich vorkommen mag. Haushaltsnaher Posten. Als Besonderheit im Experiment gemäß Figur 3 ist die Zirkulationspumpe auch zwischen den Zeitpunkten 0.6 Minuten und 1,1 Minuten eingeschaltet, also während einer Zugabe von Frischwasser. In diesem Zeitraum heben sich die Effekte aus Zufuhr des Frischwassers und einschalten der Zirkulationspumpe auf, und so bleibt das Signal "Pressure" in diesem Zeitraum im Mittel konstant.

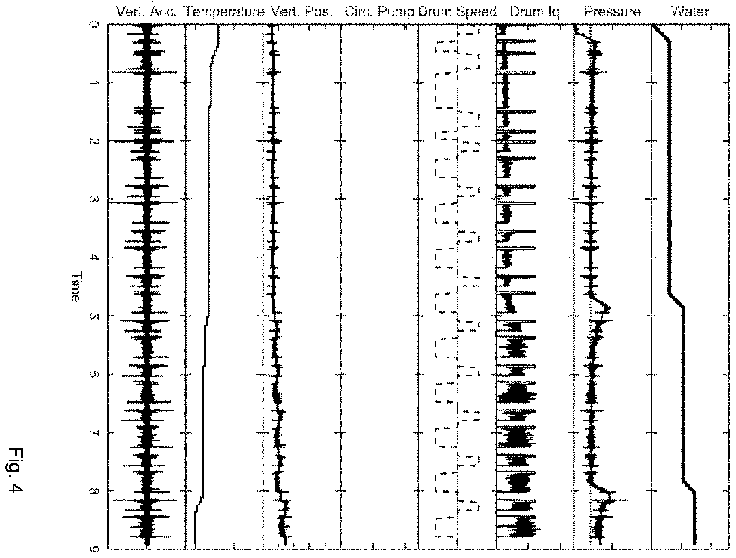

Figur 4 zeigt die Korrelationen zwischen den Betriebsdaten und dem ersten Maß bei einer Beladung der Wäschepflegemaschine 1 mit einer Füllung 6 von 4 kg Baumwoll-Frottee (Handtüchern). Die Zirkulationspumpe wird in diesem Fall nicht benutzt. Bei Einlass von Frischwasser über die Zuführleitung 15 und das Zuführventil 16 folgt das Drucksignal "Pressure" dem Anstieg des Flüssigkeitsspiegels im Laugenbehälter 3 und bleibt lange relativ konstant auf der Eintauchhöhe, zeigt jedoch deutliche Schwankungen, die durch das Rotieren der Trommel 4 verursacht werden. Ein kurzer Anstieg des Drucks etwa in der Mitte des Diagramms folgt einer weiteren Zugabe von Frischwasser, und der nachfolgende Abfall zeigt das Aufsaugen des Frischwassers durch die Füllung. Auch nach einer weiteren Zugabe von Frischwasser an der rechten Seite des Diagramms steigt der Spiegel des Frischwassers im Laugenbehälter abgesehen von Schwankungen nicht wesentlich über die Eintauchhöhe, was bedeutet, dass die Füllung auch zum Ende des Experimentes noch nicht vollständig mit Flüssigkeit gesättigt ist. Der Strom des Motors 14 nimmt im Mittel zu, was dem erhöhten Energieaufwand für das Bewegen der durch die aufgesaugte Flüssigkeit schwerer gewordenen Füllung 6 entspricht. Aus demselben Grund vergrößern sich auch die Schwankungen des Stroms. Das Positionssignal "Vert. Pos." des 3D-Sensors 25 vergrößert sich im Mittel ebenfalls, was einem Absenken des durch die zugegebene Flüssigkeit schwerer gewordenen Laugenbehälters 3 entspricht. Auch vergrößern sich die Schwankungen in diesem Signal mit zunehmender Zugabe von Flüssigkeit. Der Abfall des Temperatursignals reflektiert die Tatsache, dass das dem öffentlichen Netz entnommene und während des Experiments nicht beheizte Frischwasser kälter ist als die Wäschepflegemaschine 1 und die Füllung 6.

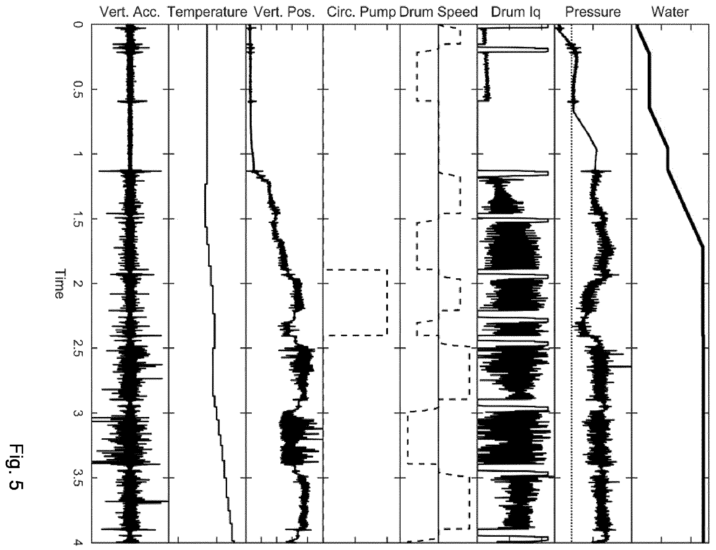

Figur 5 zeigt die Korrelationen zwischen den Betriebsdaten und dem ersten Maß bei einer Beladung der Wäschepflegemaschine 1 mit einer Füllung 6 von 1kg Synthetik-Textilien, also Textilien aus Polyesterfasern, Polyamidfasern oder dergleichen. Die in Figur 5 dargestellten Signale der verschiedenen Sensoren 19, 20, 21, 22, 24 und 25 entsprechen weitgehend den Signalverläufen in Figur 3, wobei die Schwankungen der Signale etwas größer sind. Bis zu einem Zeitpunkt von 1,9 Minuten entsprechend dem Einschalten der Zirkulationspumpe, die dann bis zum Zeitpunkt 2,4 Minuten läuft, siehe entsprechenden Signalverlauf "Circ. Pump", entspricht das Verhalten aller dargestellten Betriebsdaten weitgehend dem Verhalten wie in Figur 3. Der Strom durch den Motor 14, siehe entsprechenden Signalverlauf "Drum Iq", weist zu Beginn des Experiments bis zum Zeitpunkt 0,6 Minuten nur geringe Schwankungen auf, welche sich nach Befeuchtung der Füllung 6 ab dem Zeitpunkt 1,2 Minuten stark erhöhen. Entsprechendes gilt für die vom 3D-Sensor 25 erhaltenen Signalverläufe "Vert. Pos." und "Vert. Acc", die auf eine starke Bewegung der Füllung 6 in der rotierenden Trommel 4 zurückgehen. Der Signalverlauf "Pressure" zeigt, dass die Füllung 6 bis zum Zeitpunkt 1 Minute praktisch vollständig mit Flüssigkeit gesättigt ist und danach hinzukommendes Frischwasser nicht mehr von der Füllung 6 aufgenommen wird, sondern die freie Flotte vermehrt. Einschalten der Zirkulationspumpe zwischen 1,9 Minuten und 2,4 Minuten bewirkt einen Abfall des Signals "Pressure" dadurch, dass das Leitungssystem, das die Zirkulationspumpe mit dem Laugenbehälter 3 verbindet, mit Flüssigkeit gefüllt wird und der Spiegel der Flüssigkeit im Laugenbehälter 3 absinkt. Nach dem Abschalten der Zirkulationspumpe stellt sich der ursprüngliche Spiegel der freien Flotte wieder ein. Die reduzierten Schwankungen der Signalverläufe ab dem Zeitpunkt von 3,5 Minuten lassen erkennen, dass sich die Verteilung der Füllung 6 innerhalb der Trommel 4 vergleichmäßigt hat.

Im Ergebnis belegen die Figuren 3 bis 5 die Korrelationen zwischen dem Maß an Flüssigkeit im Laugenbehälter, der Art und der Menge der Füllung 6, und den Signalen der verschiedenen Sensoren19, 20, 21, 22, 24 und 25. Somit kann gemäß der Erfindung insbesondere das erste Maß der Flüssigkeit in dem schwingend aufgehängten und eine rotierbare Komponente 4, nämlich die Trommel 4, aufweisenden Behälter 3, nämlich dem Laugenbehälter 3, bestimmt werden, wobei die rotierbare Komponente 4 mittels des elektrischen Motors 14 zum Rotieren mit einer bestimmten Drehzahl angetrieben wird, indem der elektrische Motor 14 von einem bestimmten Strom durchflossen wird, wobei eine Zuführleitung 15 mit einem steuerbaren Zuführventil 16 zum Zuführen der Flüssigkeit in den Behälter 3 und eine Abführeinrichtung 18 zum Abführen der Flüssigkeit aus dem Behälter 3 vorgesehen sind, und wobei die Sensoren 19, 20, 21, 22, 24, 25 zum kontinuierlichen Aufnehmen von Betriebsdaten des Behälters 3 und eine mit den Sensoren 19, 20, 21, 22, 24, 25 zum Übermitteln der Betriebsdaten verbundene Steuereinrichtung 28 zum Steuern des Zuführventils 16 vorgesehen sind, wobei weiter die Sensoren 19, 20, 21, 22, 24, 25 einen dem Behälter 3 zugeordneten Schwingungssensor 25, einen Stromsensor 19 zum Messen des den Motor 14 durchfließenden Stroms, einen Drehzahlsensor 20 zum Messen der Drehzahl des Motors 14 und einen Drucksensor 21 zum Messen eines in dem Behälter 3 herrschenden hydrostatischen Drucks sowie eine Stoppuhr 29 zum Bestimmen von Öffnungszeiträumen des Zuführventils 16 umfassen, und die Betriebsdaten einer der Steuereinrichtung 28 zugehörigen Korrelationseinheit 30, in welcher anhand von Trainingsdaten, welche als Betriebsdaten für den Behälter 3 bei jeweils vorgegebenem erstem Maß gemessen wurden, gelernte Korrelationen zwischen dem ersten Maß und den Betriebsdaten gespeichert sind, zugeführt werden, und das erste Maß durch die Korrelationseinheit 30 aus den Betriebsdaten bestimmt wird, indem die Betriebsdaten als Eingangsgrößen für die Korrelationseinheit 30 verwendet werden und das erste Maß eine Ausgangsgröße der Korrelationseinheit 30 ist.

Das erfindungsgemäße Verfahren und die entsprechende Vorrichtung zu seiner Durchführung erlauben somit mit geringem Aufwand an Material und Datenverarbeitung ein genaues Bestimmen eines Maßes der Flüssigkeit in dem schwingend aufgehängten Behälter. Insbesondere ist es nicht erforderlich, die Zusammenhänge zwischen dem ersten Maß und den Betriebsdaten genau und quantitativ zu beschreiben. Das erfindungsgemäße Verfahren ist in eine Prozedur zur Anwendung der Flüssigkeit zur Optimierung der Prozedur insbesondere hinsichtlich Zeitdauer, Anforderung an Flüssigkeit sowie Dosierung zusätzlicher Mittel zu dieser und Aufwand an Energie einbindbar.

### Bezugszeichenliste

- 1: Wäschebehandlungsmaschine
- 2: Gehäuse
- 3: Schwingend aufgehängter Behälter, Laugenbehälter
- 4: Rotierbare Komponente, Trommel
- 5: Drehachse
- 6: Füllung, Wäschestücke
- 7: Manschette
- 8: Tür
- 9: Antriebswelle
- 10: Wellenlager
- 11: Erste Riemenscheibe
- 12: Antriebsriemen
- 13: Zweite Riemenscheibe
- 14: Motor
- 15: Zuführleitung
- 16: Zuführventil
- 17: Einspüleinrichtung
- 18: Abführeinrichtung
- 19: Stromsensor
- 20: Drehzahlsensor
- 21: Drucksensor
- 22: Temperatursensor
- 23: Heizung
- 24: Leistungssensor
- 25: Schwingungssensor, 3D-Sensor
- 26: Federbein
- 27: Dämpferbein
- 28: Steuereinrichtung
- 29: Stoppuhr
- 30: Korrelationseinheit

## Patentansprüche

1. Verfahren zum Bestimmen eines ersten Maßes einer Flüssigkeit in einem schwingend aufgehängten und eine rotierbare Komponente (4) aufweisenden Behälter (3), wobei die rotierbare Komponente (4) mittels eines elektrischen Motors (14) zum Rotieren mit einer bestimmten Drehzahl angetrieben wird, indem der elektrische Motor (14) von einem bestimmten Strom durchflossen wird, wobei eine Zuführleitung (15) mit einem steuerbaren Zuführventil (16) zum Zuführen der Flüssigkeit in den Behälter (3) und eine Abführeinrichtung (18) zum Abführen der Flüssigkeit aus dem Behälter (3) vorgesehen sind, und wobei Sensoren (19, 20, 21, 22, 24, 25, 29) zum kontinuierlichen Aufnehmen von Betriebsdaten des Behälters (3) und eine mit den Sensoren (19, 20, 21, 22, 24, 25, 29) zum Übermitteln der Betriebsdaten verbundene Steuereinrichtung (28) zum Steuern des Zuführventils (16) vorgesehen sind, **dadurch gekennzeichnet, dass**
zumindest zwei der Sensoren (19, 20, 21, 22, 24, 25, 29) aus einer Liste von Sensoren umfassend einen dem Behälter (3) zugeordneten Schwingungssensor (25), welcher insbesondere Schwingungen in drei zueinander orthogonalen Dimensionen misst, einen Stromsensor (19) zum Messen des den Motor (14) durchfließenden Stroms, einen Drehzahlsensor (20) zum Messen der Drehzahl des Motors (14), einen Drucksensor (21) zum Messen eines in dem Behälter (3) herrschenden hydrostatischen Drucks und eine Stoppuhr (29) zum Bestimmen von Öffnungszeiträumen des Zuführventils (16) ausgewählt sind;
die Betriebsdaten einer der Steuereinrichtung (28) zugehörigen Korrelationseinheit (30), in welcher anhand von Trainingsdaten, welche als Betriebsdaten für den Behälter (3) bei jeweils vorgegebenem erstem Maß gemessen wurden, gelernte Korrelationen zwischen dem ersten Maß und den Betriebsdaten gespeichert sind, zugeführt werden, und das erste Maß durch die Korrelationseinheit (30) aus den Betriebsdaten bestimmt wird, indem die Betriebsdaten als Eingangsgrößen für die Korrelationseinheit (30) verwendet werden und das erste Maß eine Ausgangsgröße der Korrelationseinheit (30) ist.

2. Verfahren nach Anspruch 1, bei dem in der Korrelationseinheit (30) eine aus den Trainingsdaten bestimmte Regression implementiert ist, durch welche das erste Maß aus den Betriebsdaten bestimmt wird.

3. Verfahren nach Anspruch 2, bei dem die Regression eine rekurrente Regression ist, welche als Eingangsgrößen zusätzlich zu den Betriebsdaten zeitlich verzögerte Ausgangsgrößen der Korrelationseinheit (30) verwendet.

4. Verfahren nach Anspruch 1, bei dem die Korrelationseinheit (30) ein mit den Trainingsdaten trainiertes neuronales Netz ist.

5. Verfahren nach Anspruch 4, bei dem das neuronale Netz ein rekurrentes neuronales Netz ist, welches als Eingangsgrößen zusätzlich zu den Betriebsdaten zeitlich verzögerte Ausgangsgrößen des rekurrenten neuronalen Netzes verwendet.

6. Verfahren nach einem der vorigen Ansprüche, bei dem das erste Maß durch eine für die Flüssigkeit aufnahmefähige Füllung (6) in der rotierenden Komponente (4) beeinflusst ist, wobei die Verteilung der Füllung (6) verändert wird, indem die rotierbare Komponente (4) rotiert.

7. Verfahren nach Anspruch 6, bei dem zusätzlich zu dem ersten Maß ein zweites Maß bestimmt wird, welches einen Anteil der Flüssigkeit angibt, welcher nicht von der Füllung (6) aufgenommen ist.

8. Verfahren nach Anspruch 7, welches an der in der rotierenden Komponente (4) befindlichen Füllung (6) zur Pflege mittels der Flüssigkeit angewendet wird, wobei die Füllung (6) ein textiles Material aufweist, und bei dem zusätzlich zu dem ersten Maß eine Textilart der Füllung (6) bestimmt wird.

9. Verfahren nach Anspruch 8, bei dem zusätzlich aus dem ersten Maß, dem zweiten Maß und der Textilart eine Masse der Füllung (6) bestimmt wird.

10. Verfahren nach einem der Ansprüche 8 und 9, bei dem die Flüssigkeit unter der Rotation der rotierenden Komponente (4) einen Schaum bildet und die Korrelationseinheit (30) zusätzlich ein drittes Maß bestimmt, welches ein Volumen des Schaums angibt.

11. Verfahren nach einem der Ansprüche 6 bis 10, bei welchem das erste Maß quasi fortlaufend bestimmt wird, bis das erste Maß einen vorgegebenen Wert erreicht hat, und bei welchem ein Pflegeprozess für die Füllung (6) mittels der Flüssigkeit durchgeführt wird, nachdem das erste Maß den vorgegebenen Wert erreicht hat.

12. Vorrichtung (1) zur Durchführung des Verfahrens zum Bestimmen eines ersten Maßes einer Flüssigkeit gemäß einem der vorigen Ansprüche, umfassend einen schwingend aufgehängten und eine rotierbare Komponente (4) aufweisenden Behälter (3) zum Aufnehmen der Flüssigkeit, wobei die rotierbare Komponente (4) mittels eines elektrischen Motors (14) zum Rotieren mit einer bestimmten Drehzahl antreibbar ist, indem der elektrische Motor (14) von einem bestimmten Strom durchflossen wird, wobei eine Zuführleitung (15) mit einem steuerbaren Zuführventil (16) zum Zuführen der Flüssigkeit in den Behälter (3) und eine Abführeinrichtung (18) zum Abführen der Flüssigkeit aus dem Behälter (3) vorgesehen sind, und wobei Sensoren (19, 20, 21, 22, 24, 25, 29) zum kontinuierlichen Aufnehmen von Betriebsdaten des Behälters (3) und eine mit den Sensoren (19, 20, 21, 22, 24, 25, 29) zum Übermitteln der Betriebsdaten verbundene Steuereinrichtung (28) zum Steuern des Zuführventils (16) vorgesehen sind, **dadurch gekennzeichnet, dass** zumindest zwei der Sensoren (19, 20, 21, 22, 24, 25, 29) aus einer Liste von Sensoren umfassend einen dem Behälter (3) zugeordneten Schwingungssensor (25), einen Stromsensor (19) zum Messen des den Motor (14) durchfließenden Stroms, einen Drehzahlsensor (20) zum Messen der Drehzahl des Motors (14), einen Drucksensor (21) zum Messen eines in dem Behälter (3) herrschenden hydrostatischen Drucks und eine Stoppuhr (29) zum Bestimmen von Öffnungszeiträumen des Zuführventils (16) ausgewählt sind; und
die Betriebsdaten einer der Steuereinrichtung (28) zugehörigen Korrelationseinheit (30), in welcher anhand von Trainingsdaten, welche als Betriebsdaten für den Behälter (3) bei jeweils vorgegebenem erstem Maß gemessen wurden, gelernte Korrelationen zwischen dem ersten Maß und den Betriebsdaten gespeichert sind, zuführbar sind, und das erste Maß durch die Korrelationseinheit (30) aus den Betriebsdaten bestimmt wird, indem die Betriebsdaten als Eingangsgrößen für die Korrelationseinheit (30) verwendet werden und das erste Maß eine Ausgangsgröße der Korrelationseinheit (30) ist.

13. Vorrichtung (1) nach Anspruch 12, bei der in der Korrelationseinheit (30) eine aus den Trainingsdaten bestimmte Regression implementiert ist, durch welche das erste Maß aus den Betriebsdaten bestimmt wird, wobei die Korrelationseinheit insbesondere ein NARX-Netzwerk ist.

14. Vorrichtung (1) nach Anspruch 12, bei der die Korrelationseinheit (30) ein mit den Trainingsdaten trainiertes neuronales Netz ist, welches insbesondere ein LSTM-Netz oder mit GRU-Einheiten aufgebaut ist.

15. Vorrichtung (1) nach einem der Ansprüche 12 bis 14, welche als Wäschebehandlungsmaschine (1) ausgebildet ist, wobei der Behälter (3) ein Laugenbehälter (3) ist, und wobei die rotierbare Komponente (4) eine in dem Laugenbehälter angeordnete Trommel (4) zum Aufnehmen einer aus Wäschestücken gebildeten Füllung (6) ist.
